(19) Europäisches Patentamt
European Patent Office
Office européen des brevets

(11) **EP 3 292 628 B1**

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(21) Anmeldenummer: **16710768.9**

(22) Anmeldetag: **21.03.2016**

(51) Int Cl.:
***H02P 27/08*** *(2006.01)*

(86) Internationale Anmeldenummer:
**PCT/EP2016/056136**

(87) Internationale Veröffentlichungsnummer:
**WO 2016/177507 (10.11.2016 Gazette 2016/45)**

(54) **VERFAHREN ZUM EINSCHALTEN EINER MEHRPHASIGEN ELEKTRISCHEN MASCHINE IN EINEM KRAFTFAHRZEUG**

METHOD FOR SWITCHING ON A MULTI-PHASE ELECTRICAL MACHINE IN A MOTOR VEHICLE

PROCÉDÉ DE MISE EN MARCHE D'UNE MACHINE ÉLECTRIQUE POLYPHASÉE DANS UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2015 DE 102015208353**

(43) Veröffentlichungstag der Anmeldung:
**14.03.2018 Patentblatt 2018/11**

(73) Patentinhaber:
• **Robert Bosch GmbH**
  **70442 Stuttgart (DE)**
• **SEG Automotive Germany GmbH**
  **70499 Stuttgart (DE)**

(72) Erfinder: **ROESNER, Julian**
**74199 Untergruppenbach (DE)**

(74) Vertreter: **Steinbauer, Florian et al**
**Dehns Germany**
**Theresienstraße 6-8**
**80333 München (DE)**

(56) Entgegenhaltungen:
**EP-A1- 2 634 898**      **DE-A1-102011 076 999**
**DE-A1-102012 217 116**      **DE-A1-102013 215 306**

EP 3 292 628 B1

**Beschreibung**

Die vorliegende Erfindung betrifft ein Verfahren zum Einschalten einer mehrphasigen elektrischen Maschine in einem Kraftfahrzeug sowie eine Recheneinheit und ein Computerprogramm zu dessen Durchführung.

Stand der Technik

Elektrische Maschinen in Kraftfahrzeugen, die generatorisch oder motorisch betrieben werden können, sind bekannt. Derartige elektrische Maschinen weisen zumeist einen Läufer mit einer Erregerwicklung (Läuferwicklung) auf, die mit einem Erregerstrom bestromt werden kann, und einen Ständer mit einer mehrphasigen Ständerwicklung, an die eine mehrphasige Phasenspannung mit einem Phasenspannungsvektor angelegt werden kann.

Eine Nutzung der elektrischen Maschine in einem Kraftfahrzeug kann ein häufiges Ein- und Ausschalten der elektrischen Maschine erfordern. Als problematisch kann sich das Einschalten der elektrischen Maschine insbesondere bei hohen Drehzahlen erweisen. Wird dabei zuerst die Phasenspannung eingeschaltet, kann es zu hohem Überschwingen des Phasenstroms kommen. Wird zuerst eine Erregerspannung eingeschaltet, wird in dem Ständer zunächst eine Polradspannung mit einem Polradspannungsvektor induziert, welche negativ mit der später einzuschaltenden Phasenspannung wechselwirken kann, was zu hohen elektrischen und mechanischen Belastungen der elektrischen Maschine führen kann.

Die DE 10 2013 215 306 A1 zeigt ein Verfahren zum Einschalten einer elektrischen Maschine bei hohen Drehzahlen, wobei die Phasenspannung genau dann eingeschaltet wird, wenn sie der Polradspannung entspricht. Offenbarung der Erfindung

Erfindungsgemäß werden ein Verfahren zum Einschalten einer mehrphasigen elektrischen Maschine in einem Kraftfahrzeug sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die elektrische Maschine weist einen Läufer mit Läuferwicklung und einen Ständer mit einer mehrphasigen Ständerwicklung auf. Der Ständerwicklung ist insbesondere ein Stromrichter nachgeschaltet. Über den Stromrichter ist die elektrische Maschine insbesondere mit einem Bordnetz verbunden, insbesondere mit einem Gleichspannungs-Bordnetz.

Die Erfindung bedient sich vorteilhafterweise der Maßnahme, bereits während des Einschaltens und Hochfahrens des Erregerstroms eine Phasenspannung mit einem Phasenspannungsvektor in einem PWM-Betrieb an die Ständerwicklung anzulegen, der in Betrag und Richtung (Polradwinkel = 0°) dem Polradspannungsvektor entspricht. Erreicht der Polradspannungsvektor schließlich nach Betrag und Richtung einen Phasenspannungsvektor einer in einem Blockbetrieb anzulegenden Phasenspannung, wird in den Blockbetrieb umgeschaltet.

Vorteile der Erfindung

Im Zuge des Verfahrens wird ein optimaler Schaltzeitpunkt zum Einschalten der elektrischen Maschine bestimmt. Durch den PWM-Betrieb kann die Phasenspannung insbesondere entsprechend der Polradspannung angelegt werden, so dass sich Phasenströme von im Wesentlichen 0 A ergeben. Durch Auswertung wenigstens eines die Polradspannung beeinflussenden Parameters wird ein optimaler Zeitpunkt bestimmt, zu welchem zwischen PWM-Betrieb und Blockbetrieb gewechselt wird und zu welchem die elektrische Maschine somit eingeschaltet, also motorisch oder generatorisch betrieben wird. Dieser Zeitpunkt wird derart bestimmt, dass keine unerwünschten Stromspitzen entstehen. Somit werden beim Einschalten der elektrischen Maschine hohe elektrische und mechanische Belastungen vermieden.

Es wird ermöglicht, die elektrische Maschine unabhängig von einer Drehzahl der elektrischen Maschine und/oder einer Brennkraftmaschine des Kraftfahrzeugs einzuschalten. Insbesondere wird es ermöglicht, die elektrische Maschine bei hohen Drehzahlen auf schonende Weise einzuschalten.

Das Verfahren eignet sich gleichermaßen für einen generatorischen als auch einen motorischen Betrieb der elektrischen Maschine und für sämtliche Arten von Kraft- und Nutzfahrzeugen, insbesondere auch für Hybridfahrzeuge.

Insbesondere wird es ermöglicht, die elektrische Maschine motorisch zu betreiben und die Brennkraftmaschine zu unterstützen. Auch bei hohen Drehzahlen kann die elektrische Maschine problemlos und ohne große Belastungen eingeschaltet werden. Dabei muss beispielsweise nicht abgewartet werden, bis die Drehzahl einen zulässigen Grenzwert unterschreitet, um die elektrische Maschine einzuschalten. Die elektrische Maschine kann zu einem zweckmäßigen bestmöglichen Zeitpunkt eingeschaltet werden.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramm ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen

Figur 1 zeigt schematisch eine Anordnung aus einer Brennkraftmaschine und einer elektrischen Maschine eines Kraftfahrzeugs, die zur Durchführung einer Ausführungsform der Erfindung eingerichtet sind.

Figur 2 zeigt schaltplanartig eine fünf-phasige elektrische Maschine eines Kraftfahrzeugs, die dazu eingerichtet ist, eine Ausführungsform der Erfindung durchzuführen.

Figur 3 zeigt schematisch ein einphasiges Ersatzschaltbild der fünf-phasigen elektrischen Maschine aus Figur 2.

Figur 4 zeigt schematisch eine bevorzugte Ausführung eines erfindungsgemäßen Verfahrens zum Einschalten einer elektrischen Maschine als ein Blockschaltbild.

Figur 5 zeigt schematisch Zeigerdiagramme, die im Zuge einer Ausführungsform der Erfindung bestimmt werden können.

Ausführungsform(en) der Erfindung

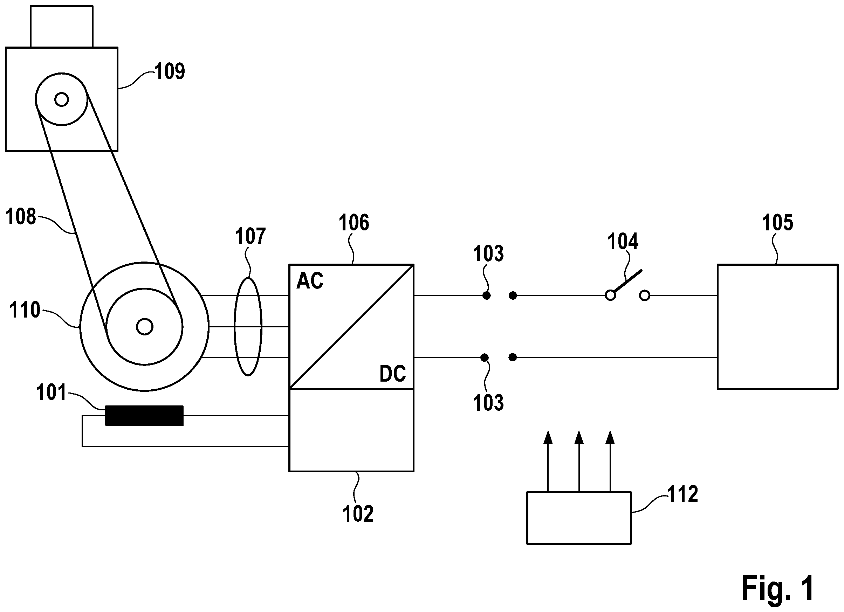

Figur 1 zeigt schematisch Komponenten eines Kraftfahrzeugs. Das Kraftfahrzeug weist eine elektrische Maschine 110 auf, wobei im Folgenden beispielsweise von einem fremderregten Synchrongenerator ausgegangen wird. Die elektrische Maschine 110 kann über eine Brennkraftmaschine 109 des Kraftfahrzeugs beispielsweise generatorisch betrieben werden. Die elektrische Maschine 110 ist über entsprechende Kopplungsmittel, beispielsweise eine mechanische Verbindung 108 in Form eines Riementriebs oder einer Welle, mit der Brennkraftmaschine 109 drehmomentschlüssig verbunden. Alternativ kann die elektrische Maschine 110 auch motorisch betrieben werden und kann dabei die Brennkraftmaschine 109 unterstützen.

Die elektrische Maschine 110 ist elektrisch mit einem Stromrichter 106 verbunden, wobei mehrere Phasenanschlüsse 107 vorgesehen sind. Der Stromrichter kann als Gleich- und als Wechselrichter betrieben werden. Die mehreren Phasenanschlüsse 107 sind Phasenanschlüsse einer mehrphasigen Ständerwicklung eines Ständers der elektrische Maschine 110. Gleichspannungsseitig ist über einen Feldregler 102 eine Läuferwicklung 101 der elektrischen Maschine 110 angeschlossen. Der Feldregler 102 ist für die Ansteuerung der Läuferwicklung 101 zuständig. Über Gleichspannungsanschlüsse 103 kann ein Energiespeicher, beispielsweise eine Fahrzeugbatterie 105, an die Gleichspannungsseite des Stromrichters 106 angebunden werden. Über ein Schaltelement 104 kann die Fahrzeugbatterie 105 elektrisch mit der Gleichspannungsseite des Stromrichters 106 verbunden und von dieser getrennt werden.

Eine als Steuergerät 112 ausgebildete Recheneinheit ist, insbesondere programmtechnisch, dazu eingerichtet, eine Ausführungsform des erfindungsgemäßen Verfahrens durchzuführen. Insbesondere steuert das Steuergerät 112 den Feldregler 102 und den Stromrichter 106 entsprechend der Erfindung an.

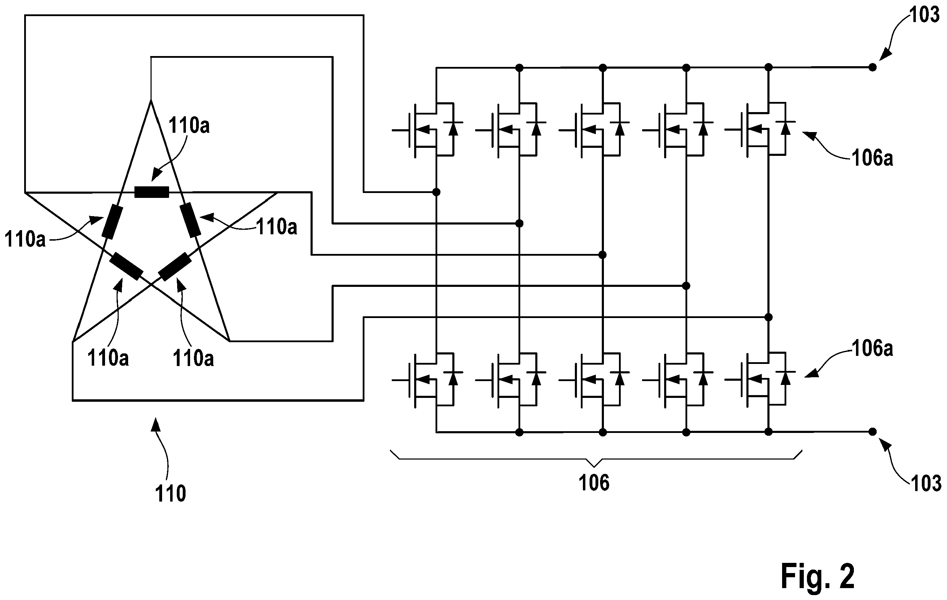

In Figur 2 ist die elektrische Maschine 110 schaltplanartig dargestellt. Die elektrische Maschine 110 ist in diesem speziellen Beispiel als eine fünf-phasige elektrische Maschine dargestellt. Die elektrische Maschine 110 weist einen Ständer mit einer fünf-phasigen Ständerwicklung 110a auf. Der Stromrichter 106 weist mehrere elektrische Schaltelemente auf, die in diesem speziellen Beispiel als MOSFETs 106a (Metall-Oxid-Halbleiter-Feldeffekttransistor) ausgebildet sind. MOSFETs entsprechen schaltungstechnisch einem Transistor und einer in Sperrrichtung geschalteten Inversdiode. Die MOSFETs 106a sind beispielsweise einerseits über Stromschienen mit den Ständerwicklungen 110a und andererseits mit den Gleichspannungsanschlüssen 103 verbunden.

Wird die elektrische Maschine 110 in einem generatorischen Betrieb betrieben, wird in der Ständerwicklung 110a eine fünf-phasige Wechselspannung, die sogenannte Phasenspannung, erzeugt. Durch zweckmäßiges getaktetes Ansteuern der MOSFETs 110a wird diese fünf-phasige Wechselspannung in eine Gleichspannung gerichtet. Mittels dieser umgewandelten Gleichspannung kann beispielsweise die Fahrzeugbatterie 105 aufgeladen werden.

Wird die elektrische Maschine 110 in einem motorischen Betrieb betrieben, wird durch zweckmäßiges getaktetes Ansteuern der MOSFETs 110a die Gleichspannung der Fahrzeugbatterie 105 in die fünf-phasige Phasenspannung mit einem umlaufenden Phasenspannungsvektor gewandelt. Das zweckmäßige, getaktete Ansteuern der MOSFETs 110a erfolgt dabei jeweils durch das Steuergerät 112.

Es sei angemerkt, dass die vorliegende Erfindung nicht auf eine fünf-phasige elektrische Maschine beschränkt sein soll, sondern für elektrische Maschinen mit einer zweckmäßigen Anzahl an Phasenanschlüsse 107 geeignet ist.

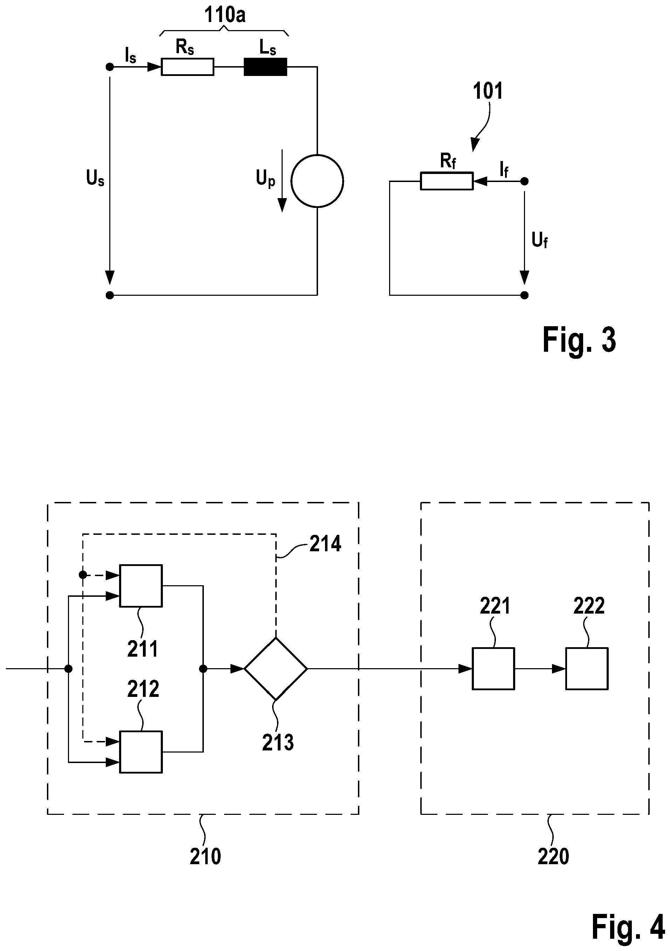

Bevorzugte Ausführungen des Verfahrens zum Einschalten der elektrischen Maschine 110 werden im Folgenden unter Bezug auf die Figuren 3, 4, 5 und 6 beschrieben. Weiterhin erfolgt diese Beschreibung anhand des speziellen Beispiels eines motorischen Betriebs der elektrischen Maschine 110. Insbesondere werden die bevorzugten Ausführungen der erfindungsgemäßen Verfahren durch das Steuergerät 112 ausgeführt. Das Steuergerät steuert im Zuge dessen insbesondere den Feldregler 102, den Stromrichter 106 und optional auch das Schaltelement 104 entsprechend an.

Figur 3 zeigt schematisch ein einphasiges Ersatzschaltbild einer fremderregten Synchronmaschine im Allgemeinen und der fünf-phasigen elektrischen Maschine 110 gemäß Figur 2 im Speziellen. Die Läuferwicklung 101 entspricht in dem Ersatzschaltbild einem Widerstand $R_f$. Die Ständerwicklung 110a entspricht in dem Ersatzschaltbild einer Reihenschaltung aus einem Widerstand $R_S$ und einer Induktivität $L_S$.

In Figur 4 ist eine bevorzugte Ausführung eines erfindungsgemäßen Verfahrens zum Einschalten der elektrischen Maschine 110 als ein Blockschaltbild dargestellt.

In dem motorischen Betrieb wird die elektrische Maschine 110 mit einer Erregerspannung $U_f$ und der Phasenspannung $U_S$ versorgt und wandelt diese elektrische Energie in mechanische Energie, um die Brennkraftmaschine 109 mit dieser mechanischen Energie zu unterstützen. Betrag bzw. Amplitude dieser Phasenspannung $U_S$ werden insbesondere durch die an den Stromrichter 106 angelegte Gleichspannung der Fahrzeugbatterie 105 als Versorgungsspannung vorgegeben. Die elektrische Maschine 110 ist dabei zunächst ausgeschaltet. Durch die drehmomentschlüssige Verbindung mit der Brennkraftmaschine 109 dreht sich die elektrische Maschine mit einer von der Brennkraftmaschine 109 vorgegebenen Drehzahl $\omega$. Das Einschalten der elektrischen Maschine erfolgt dabei im Zuge der bevorzugten Ausführungsform des erfindungsgemäßen Verfahrens.

Die elektrische Maschine 110 wird zunächst in einem PWM-Betrieb 210 betrieben. Dabei wird in Schritt 211 in einem PWM-Betrieb an die Ständerwicklung 110a durch Pulsbreitenmodulation der Versorgungsspannung eine Phasenspannung mit einem Phasenspannungsvektor angelegt, der in Betrag und Richtung einem aktuell vorherrschenden Polradspannungsvektor einer Polradspannung $U_p$ entspricht, d.h. ein Polradwinkel zwischen Polradspannungsvektor und Phasenspannungsvektor ist Null. Da zu diesem Zeitpunkt noch kein Erregerstrom fließt, ist der Betrag der Polradspannung Null, so dass sich die Ansteuerung ohne nennenswerten Stromfluss in den Phasen aktivieren lässt.

In einem Schritt 212 wird die Erregerspannung $U_f$ mittels des Feldreglers 102 an die Läuferwicklung 101 angelegt, wodurch in der Läuferwicklung 101 ein Erregerstrom $I_f$ erzeugt wird. Der Erregerstrom $I_f$ wird insbesondere mittels eines PI-Reglers auf einen gewünschten Sollwert geregelt. Der Erregerstrom $I_f$ induziert bei drehender elektrischer Maschine in der Statorwicklung 110a die Polradspannung $U_p$. Die Polradspannung $U_p$ ist dabei abhängig von der Drehzahl $\omega$ und von dem Betrag des Erregerstroms $I_f$.

In Schritt 213 wird wenigstens ein diese Polradspannung $U_p$ beeinflussender Parameter bestimmt. Vorzugsweise werden ein Betrag und eine Richtung des Polradspannungsvektor als der die Polradspannung $U_p$ beeinflussende Parameter bestimmt. Alternativ oder zusätzlich können auch vorzugsweise der Betrag des Erregerstroms $I_f$ und/oder die Drehzahl $\omega$ der elektrischen Maschine 110 als der wenigstens eine die Polradspannung $U_p$ beeinflussende Parameter bestimmt werden. Die Drehzahl $\omega$ der elektrischen Maschine 110 und der Betrag des Erregerstroms $I_f$ sind zumeist ohnehin bekannt bzw. werden in dem Kraftfahrzeug ohnehin bestimmt. Daher ist hier kein zusätzlicher Aufwand nötig, um den Betrag des Erregerstroms $I_f$ und/oder die Drehzahl $\omega$ der elektrischen Maschine 110 zu bestimmen.

In diesem speziellen Beispiel wird zunächst der Betrag des Polradspannungsvektor als ein die Polradspannung $U_p$ beeinflussender Parameter bestimmt. Dabei wird der Betrag insbesondere in Abhängigkeit von dem Erregerstrombetrag $I_f$ und der Drehzahl $\omega$ bestimmt. Diese Bestimmung erfolgt insbesondere nach der folgenden Formel:

$$U_p = \Psi_R \frac{2\pi}{60} \omega$$

$\Psi_R$ ist eine vom Erregerstrom $I_f$ erzeugte Flussverkettung. Aufgrund von Sättigungseffekten ist der Zusammenhang zwischen Erregerstrom $I_f$ und Flussverkettung $\Psi_R$ nicht linear. Insbesondere ist dieser Zusammenhang zwischen Erregerstrom $I_f$ und Flussverkettung $\Psi_R$ als eine Kennlinie oder in Form eines Ausgleichspolynoms hinterlegt, insbesondere in dem Steuergerät 112. Die Richtung des Polradspannungsvektors ergibt sich zwanglos aus der Konstruktion und aktuellen Lage des Läufers.

Nun wird überprüft, ob Betrag und Richtung des Polradspannungsvektors als der wenigstens eine die Polradspannung $U_p$ beeinflussende Parameter jeweils einen bestimmten Schwellwert erreichen. Der jeweilige Schwellwert wird dabei derart gewählt, dass bei einem Umschalten vom PWM-Betrieb 210 in einen Blockbetrieb 220 unerwünschte Stromspitzen und hohe elektrische und mechanische Belastungen vermieden werden. Der jeweilige Schwellwert wird daher insbesondere in Abhängigkeit von der im Blockbetrieb anzulegenden Phasenspannung $U_S$ gewählt. Der jeweilige Schwellwert wird demgemäß derart gewählt, dass zu einem Zeitpunkt in den Blockbetrieb umgeschaltet wird, zu dem die Polradspannung $U_p$ der im Blockbetrieb anzulegenden Phasenspannung $U_S$ nicht entgegenwirkt, was zu hohen elektrischen und mechanischen Belastungen führen würde.

Vorteilhafterweise entspricht der jeweilige Schwellwert daher einem Betrag bzw. einer Richtung des Phasenspannungsvektors der im Blockbetrieb anzulegenden Phasenspannung $U_S$ unmittelbar nach dem Aktivieren des Blockbetriebs. Dieser Phasenspannungsvektor wird auch als "aktueller" Phasenspannungsvektor bezeichnet, obwohl er vor dem Einschalten des Blockbetriebs nur theoretisch vorliegt. Insbesondere bedeutet dies, dass bei Erreichen des jeweiligen Schwellwerts der Polradspannungsvektor und der Phasenspannungsvektor beim Umschalten auf den Blockbetrieb denselben Betrag und dieselbe Richtung haben, also der Polradwinkel 0° ist. Der Betrag des aktuellen Phasenspannungsvektors ist durch die an den Stromrichter 106 angelegte Gleichspannung der Fahrzeugbatterie 105 vorgegeben.

Solange die Polradspannung $U_p$ im PWM-Betrieb kleiner ist als dieser Betrag des Phasenspannungsvektors, kann kein Phasenstrom $I_S$ über die Inversdioden der MOSFETs 106a des Stromrichters 106 fließen.

Der Betrag des Polradspannungsvektors lässt sich über den Erregerstrom $I_f$ einstellen. Der Erregerstrom $I_f$ wird so lange erhöht, angedeutet durch Bezugszeichen 214, bis der Betrag des Polradspannungsvektors seinen Schwellwert erreicht. Währenddessen wird auch die Phasenspannung entsprechend nachgeführt, so dass der Phasenspannungsvektor weiterhin dem Polradspannungsvektor in Betrag und Richtung entspricht (ebenfalls angedeutet durch Bezugszeichen 214).

Erreichen Betrag und Richtung des Polradspannungsvektors ihren jeweiligen Schwellwert, besitzen Polradspannungsvektor und Phasenspannungsvektor unmittelbar nach dem Einschalten des Blockbetriebs also denselben Betrag und dieselbe Richtung (Polradwinkel = 0°), wird der PWM-Betrieb 210 deaktiviert und der Blockbetrieb 220 aktiviert. Gemäß Schritt 221 wird dabei, insbesondere durch den Stromrichter 106, Versorgungsspannung blockförmig an die Ständerwicklungen 110a angelegt.

Indem in Schritt 221 in den Blockbetrieb umgeschaltet wird, ist die elektrische Maschine 110 eingeschaltet und kann die Brennkraftmaschine 109 unterstützen. Vorteilhafterweise wird nun in Schritt 222 ein Drehmoment der elektrischen Maschine 110 bzw. der Brennkraftmaschine 109 eingestellt. Das Drehmoment wird dabei durch Variation des Polradwinkels $\vartheta$ eingestellt, welcher wiederum durch die Richtung des Phasenspannungsvektors eingestellt wird, die wiederum durch entsprechende Ansteuerung des Stromrichters eingestellt wird. Über einen zweckmäßigen Regelkreis wird der Polradwinkel $\vartheta$ so variiert, dass ein gewünschtes Drehmoment eingestellt wird.

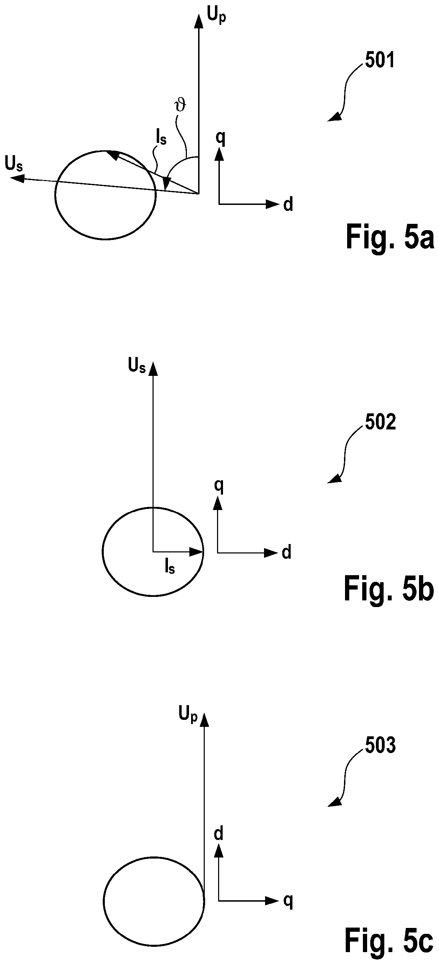

Ein Zusammenhang zwischen den Phasenspannung $U_S$, der Polradspannung $U_p$, dem Phasenstrom $I_S$ und dem Erregerstrom $I_f$ und damit der theoretische Hintergrund der erfindungsgemäßen Verfahren werden anhand von Figur 5 genauer erläutert.

In Figur 5 sind dabei Zeigerdiagramme bzw. dq-Diagramme 501 bis 503 einer fremderregten Synchronmaschine, insbesondere der fünf-phasigen elektrischen Maschine 110 gemäß Figur 2, in einem drehfeldfesten dq-Koordinatensystem beispielhaft dargestellt, wie sie im Zuge einer Ausführungsform der Erfindung bestimmt werden können.

Die Polradspannung $U_p$ liegt dabei definitionsgemäß auf der q-Achse und ist als ein erster Zeiger dargestellt. Die q-Achse bildet die sogenannte Erregerachse. Die d-Achse ist dabei elektrisch orthogonal zu der q-Achse. Die Phasenspannung $U_S$ ist als ein zweiter Zeiger dargestellt und ist um einen Polradwinkel $\vartheta$ gegenüber der Polradspannung $U_p$ verschoben. Der Polradwinkel $\vartheta$ wird auch als Lastwinkel bezeichnet. Im generatorischen Betrieb der elektrischen Maschine 110 nimmt der Polradwinkel $\vartheta$ positive Werte an, ein Polrad bzw. der Erreger "eilt voraus". Im motorischen Betrieb der elektrischen Maschine 110, wie er in Figur 5 dargestellt ist, nimmt der Polradwinkel $\vartheta$ negative Werte an, das Polrad bzw. der Erreger "eilt nach".

Im Blockbetrieb ist die Höhe der Phasenspannung $U_S$ durch die an den Stromrichter 106 angelegte Gleichspannung der Fahrzeugbatterie 105 vorgegeben. Die Phasenspannung $U_S$ lässt sich daher im Blockbetrieb nur in ihrer Phasenlage bezüglich der Polradspannung $U_p$ variieren, also über ihren Polradwinkel $\vartheta$ gegenüber der Polradspannung $U_p$. Die Phasenlage bzw. der Polradwinkel $\vartheta$ kann mittels des Stromrichters 106 zweckmäßig eingestellt werden.

Der Phasenstrom $I_S$ ist in dem dq-Koordinatensystem als ein dritter Vektor dargestellt. Es ergibt sich ein Phasenstromvektor, dessen Ortskurve bei Änderung des Polradwinkels von 0-360° dem dargestellten Kreis entspricht.

In Figur 5a ist ein erstes dq-Diagramm 501 dargestellt, wobei der Polradspannungsvektor $U_p$ als der wenigstens eine die Polradspannung beeinflussende Parameter nicht den Schwellwert erreicht. Dabei ist zu erkennen, dass für keinen Polradwinkel $\vartheta$ der Phasenstrom $I_S$ zu Null wird. Ein Einschalten der elektrischen Maschine 110 ohne Überschwingen ist dabei nicht möglich.

In Figur 5b ist ein zweites dq-Diagramm 502 dargestellt, wobei der Erregerstrom $I_f$ ausgeschaltet ist, also den Wert Null hat. Demgemäß besitzt auch die Polradspannung $U_p$ den Wert Null. Auch hier ist zu erkennen, dass für keinen Polradwinkel $\vartheta$ der Phasenstrom $I_S$ zu Null wird. Auch in diesem Fall ist ein Einschalten der elektrischen Maschine 110 ohne Überschwingen nicht möglich.

In Figur 5c ist ein drittes dq-Diagramm 503 dargestellt, wobei der Polradspannungsvektor $U_p$ als der wenigstens eine die Polradspannung beeinflussende Parameter den Schwellwert erreicht. Der Polradwinkel $\vartheta$ beträgt dabei 0° so dass die Phasenlage der Phasenspannung $U_S$ einer Phasenlage der Polradspannung $U_p$ entspricht. Da Phasenspannung $U_S$ und Polradspannung $U_p$ nach Betrag und Richtung gleich sind, wird dabei kein Phasenstrom $I_S$ erzeugt.

In dem PWM-Betrieb 210 wird die Phasenspannung entsprechend der Polradspannung angelegt, so dass sich Phasenströme von im Wesentlichen 0 A ergeben. Dies wird erreicht, indem an die Phasen ein Spannungsvektor angelegt wird, der in Betrag und Richtung genau der aktuellen Polradspannung $U_p$ entspricht. Die

Ansteuerung kann entweder geregelt mit Hilfe einer feldorientierten Regelung erfolgen, wobei als Sollwerte für den Phasenstrom im dq-Koordinatensystem die Werte $I_d=0$ und $I_q=0$ vorgegeben werden. Die Ansteuerung kann jedoch auch gesteuert erfolgen, da die Spannungssollwerte sich auf einfache Weise zu $U_d=0$, $U_q=U_p$ ergeben.

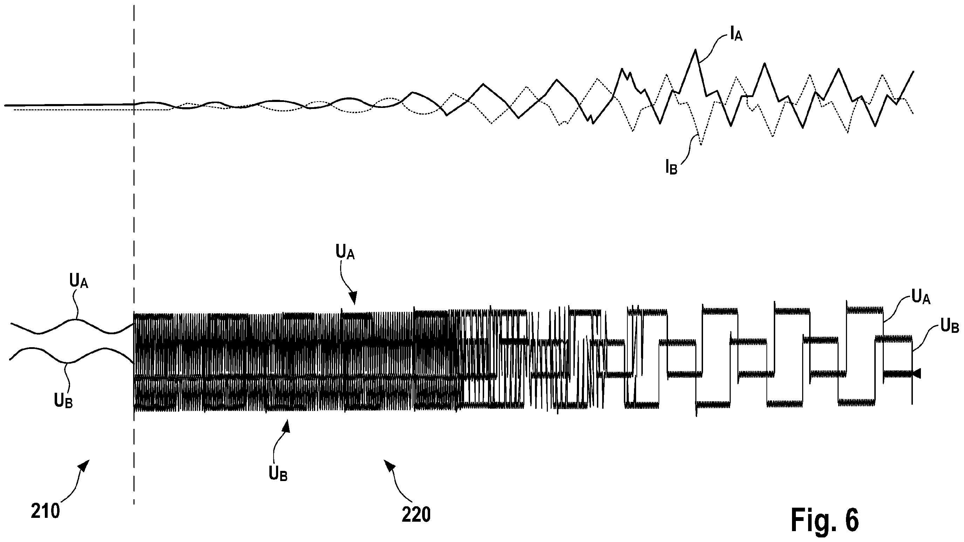

In Figur 6 sind zeitliche Verläufe von Komponenten der Phasenspannung und des Phasenstroms schematisch dargestellt, die im Zuge einer bevorzugten Ausführungsform des erfindungsgemäßen Verfahrens vorliegen.

Dargestellt sind jeweils zwei der drei Komponenten $U_A$ und $U_B$ einer drei-phasigen Phasenspannung, die im Zuge des Einschaltens an die Ständerwicklung angelegt wird, sowie zwei der drei Komponenten $I_A$ und $I_B$ des drei-phasigen Phasenstroms, der dadurch in der Ständerwicklung erzeugt wird. Wie zu erkennen ist, sind die Komponenten $U_A$ und $U_B$ während des PWM-Betriebs 210 pulsbreitenmoduliert und gehen in dem Blockbetrieb 220 in blockförmige Spannungen über. Die Komponenten der Phasenströme $I_A$ und $I_B$ sind zunächst während des PWM-Betriebs 210 nahe null und werden im Blockbetrieb nahezu ohne Überschwinger eingeschaltet.

**Patentansprüche**

1. Verfahren zum Einschalten einer mehrphasigen elektrischen Maschine (110) in einem Kraftfahrzeug, wobei die mehrphasige elektrische Maschine (110) einen Läufer mit einer Läuferwicklung (101) und einen Ständer mit einer mehrphasigen Ständerwicklung (110a) aufweist,

    - wobei in einem PWM-Betrieb (210) an die Ständerwicklung (110a) eine Phasenspannung mit einem Phasenspannungsvektor ($U_s$) angelegt wird (211), der in Betrag und Richtung einem Polradspannungsvektor ($U_p$) einer Polradspannung entspricht, und
    - die Läuferwicklung (101) mit einem Erregerstrom ($I_f$) bestromt wird (212), **dadurch gekennzeichnet, daß** der PWM-Betrieb (210) deaktiviert und ein Blockbetrieb (220) zum Anlegen der Phasenspannung aktiviert wird, wenn wenigstens ein die Polradspannung beeinflussender Parameter einen Schwellwert erreicht, wobei der Schwellwert einem Betrag und einer Richtung des Phasenspannungsvektors ($U_s$) der im Blockbetrieb (220) anzulegenden Phasenspannung entspricht.

2. Verfahren nach Anspruch 1, wobei ein Betrag und/oder eine Richtung des Polradspannungsvektors ($U_p$) als der wenigstens eine die Polradspannung beeinflussende Parameter verwendet werden.

3. Verfahren nach Anspruch 1, wobei der Betrag des Phasenspannungsvektors ($U_s$) der im Blockbetrieb (220) anzulegenden Phasenspannung durch eine Gleichspannung eines mit der elektrischen Maschine (110) verbundenen Bordnetzes des Kraftfahrzeugs gegeben ist.

4. Verfahren nach einem der vorstehenden Ansprüche, wobei der Betrag des Erregerstroms ($I_f$) und/oder die Drehzahl der elektrischen Maschine (110) als der wenigstens eine die Polradspannung beeinflussende Parameter verwendet werden (220, 320).

5. Verfahren nach einem der vorstehenden Ansprüche, wobei in dem Blockbetrieb (220) ein Drehmoment mittels Vorgabe eines bestimmten Polradwinkels ([]) zwischen der Phasenspannung ($U_s$) und der Polradspannung eingestellt wird.

6. Verfahren nach einem der vorstehenden Ansprüche, wobei die elektrische Maschine (110) motorisch oder generatorisch betrieben wird.

7. Recheneinheit (112), die dazu eingerichtet ist, ein Verfahren nach einem der vorstehenden Ansprüche durchzuführen.

8. Computerprogramm, das die Recheneinheit (112) nach Anspruch 7 dazu veranlasst, ein Verfahren nach einem der Ansprüche 1 bis 6 durchzuführen, wenn es auf der Recheneinheit (112) ausgeführt wird.

9. Maschinenlesbares Speichermedium mit einem darauf gespeicherten Computerprogramm nach Anspruch 8.

**Claims**

1. Method for switching on a multi-phase electrical machine (110) in a motor vehicle, wherein the multi-phase electrical machine (110) comprises a rotor having a rotor winding (101) and a stator having a multi-phase stator winding (110a),

    - wherein, in a PWM operating mode (210), a phase voltage having a phase voltage vector (Us) corresponding in magnitude and direction to a pole wheel voltage vector ($U_P$) of a pole wheel voltage is applied (211) to the stator winding (110a), and
    - the rotor winding (101) is energised (212) by an excitation current ($I_f$),

    **characterized in that**
    the PWM operating mode (210) is deactivated and a block operating mode (220) for applying the phase voltage is activated when at least one parameter influencing the pole wheel voltage reaches a threshold value, wherein the threshold value corresponds to a magnitude and a direction of the phase voltage vector (Us) of the phase voltage to be applied in the block operating mode (220).

2. Method according to claim 1, wherein a magnitude and/or a direction of the pole wheel voltage vector ($U_P$) is used as the at least one parameter influencing the pole wheel voltage.

3. Method according to claim 1, wherein the magnitude of the phase voltage vector (Us) of the phase voltage to be applied in block operating mode (220) is defined by a DC voltage of an electrical system of the motor vehicle connected to the electrical machine (110).

4. Method according to one of the above claims, wherein the magnitude of the excitation current ($I_f$) and/or the rotational speed of the electric machine (110) are used (220, 320) as the at least one parameter influencing the pole wheel voltage.

5. Method according to one of the above claims, wherein in the block operating mode (220) a torque is set by specifying a specific pole wheel angle ($\vartheta$) between the phase voltage (Us) and the pole wheel voltage.

6. Method according to any one of the preceding claims, wherein the electrical machine (110) is operated in motor mode or in generator mode.

7. Computation unit (112) which is configured to perform a method according to any one of the preceding claims.

8. Computer program which causes the computation unit (112) according to claim 7 to perform a method according to any one of claims 1 to 6 when executed on the computation unit (112).

9. Machine-readable storage medium on which is stored a computer program according to claim 8.

**Revendications**

1. Procédé pour mettre en marche une machine électrique polyphasée (110) dans un véhicule automobile, dans lequel la machine électrique polyphasée (110) comporte un rotor avec un enroulement rotorique (101) et un stator avec un enroulement statorique polyphasé (110a),

    - dans lequel, dans un mode à largeur d'impulsion modulée (PWM) (210), une tension entre phases ayant un vecteur de tension entre phases ($U_s$) est appliquée à l'enroulement statorique (110a), lequel vecteur correspondant, en termes de grandeur et de direction à un vecteur de tension de roue polaire ($U_p$) d'une tension de roue polaire,
    - l'enroulement rotorique (101) est alimenté par un courant d'excitation ($I_f$),

**caractérisé en ce que**
le mode PWM (210) est désactivé et un mode de blocage (220) est activé pour appliquer la tension entre phases lorsqu'au moins un paramètre ayant une influence sur la tension de roue polaire atteint une valeur de seuil, la valeur de seuil correspondant à une grandeur et à une direction du vecteur de tension entre phases ($U_s$) de la tension entre phases appliquée en mode de blocage (220).

2. Procédé selon la revendication 1, dans lequel une grandeur et/ou une direction du vecteur de tension de roue polaire ($U_p$) sont utilisées en tant que le au moins un paramètre ayant une influence sur la tension de roue polaire.

3. Procédé selon la revendication 1, dans lequel la grandeur du vecteur de tension entre phases ($U_s$) de la tension entre phases appliquée en mode de blocage (220) est donnée par une tension continue d'un réseau de bord du véhicule automobile connecté à la machine électrique (110).

4. Procédé selon l'une des revendications précédentes, dans lequel la grandeur du courant d'excitation ($I_f$) et/ou la vitesse de rotation de la machine électrique (110) sont utilisées en tant que le au moins un paramètre ayant une influence sur la tension de roue polaire (220, 320).

5. Procédé selon l'une des revendications précédentes, dans lequel dans le mode de blocage (220), un couple est réglé en prédéterminant un angle de roue polaire ($\vartheta$) spécifique entre la tension entre phases (Us) et la tension de roue polaire.

6. Procédé selon l'une des revendications précédentes, dans lequel la machine électrique (110) fonctionne en mode moteur ou en mode générateur.

7. Unité de calcul (112) conçue pour mettre en œuvre un procédé selon l'une des revendications précédentes.

8. Programme informatique permettant à l'unité de calcul (112) de mettre en œuvre un procédé selon l'une des revendications 1 à 6, lorsqu'il est exécuté sur l'unité de calcul (112).

**9.** Support de stockage lisible par machine sur lequel est stocké un programme informatique selon la revendication 8.

Fig. 1

Fig. 2

EP 3 292 628 B1

110a

$I_s$  $R_s$  $L_s$

$U_s$  $U_p$

101

$R_f$  $I_f$

$U_f$

# Fig. 3

214

211

212

213

221  222

210  220

# Fig. 4

Fig. 5a

Fig. 5b

Fig. 5c

Fig. 6

**IN DER BESCHREIBUNG AUFGEFÜHRTE DOKUMENTE**

**In der Beschreibung aufgeführte Patentdokumente**

- DE 102013215306 A1